# EUROPÄISCHE PATENTSCHRIFT

(11) **EP 0 483 700 B1**
(45) Veröffentlichungstag und Bekanntmachung des Hinweises auf die Patenterteilung: **24.08.1994**
(21) Anmeldenummer: 91118280.6
(22) Anmeldetag: 26.10.1991
(51) Int. Cl.: A47J 31/46

(54) **Vorrichtung zur Zubereitung von Heissgetränken**
Device for preparing hot drinks
Appareil pour préparer des boissons chaudes

(30) Priorität: 02.11.1990 CH 3485/90
(43) Veröffentlichungstag der Anmeldung: 06.05.1992
(73) Patentinhaber: ELDOM ROTHRIST AG, CH-4852 Rothrist (CH)
(72) Erfinder: Weber, René, CH-4852 Rothrist (CH)
(74) Vertreter: Lauer, Joachim, Dr.

(56) Entgegenhaltungen:
- EP-A- 0 217 211
- EP-A- 0 307 497
- CH-A- 262 525
- GB-A- 983 634

## Beschreibung

### Technisches Gebeit

Die vorliegende Erfindung betrifft eine Vorrichtung zur Zubereitung von Heissgetränken mit einem an einem Verteilerblock angeflanschten Mehrwegeventil, wobei der Verteilerblock mit einem Zufuhrkanal für Heisswasser oder Heissdampf zu dem Mehrwegeventil und mit von diesem zu verschiedenen Einrichtungen, wie Kaffeefilter, Aufschäumdüse und/oder Restwasser-Auffangbehälter, abgehenden Verteilerkanälen und das Mehrwegeventil mit einer Lochscheibe und einer drehbaren Steuerscheibe versehen ist.

Solche Vorrichtungen sind beispielsweise als Espressomaschinen bekannt. Die dort verwendeten Mehrwegeventile, zumeist 4/3-Wegeventile, dienen dazu, in einer ersten Schaltstellung das in einem Wassererhitzer erhitzte Wasser dem Kaffeemehl für die Zubereitung von Espresso oder in einer anderen Schaltstellung Heissdampf der Aufschäumdüse zum Erhitzen und Aufschäumen von Milch für die anschliessende Zubereitung von Cappuccino zuzuführen. Eine dritte, üblicherweise mittlere Schaltstellung dient zur Entlüftung der Vorrichtung. In dieser Schaltstellung kann im Wassererhitzer noch befindlicher Heissdampf sich entspannen und als Restwasser in einen Auffangbehälter abfliessen.

Aufgrund der notwendigerweise hohen Temperaturen (von deutlich über 100°C) sowie Drücke (von über 15 bar) ist das Mehrwegeventil grossen Beanspruchungen ausgesetzt und einem starken Verschleiss unterworfen. Als Bauelement mit beweglichen Teilen ist es in besonderem Masse auch durch Kalkablagerungen in seiner Funktion gefährdet.

Aus der EP 0 307 497 A1 ist eine Vorrichtung der eingangs genannten Art bekannt, bei der das Mehrwegeventil als Keramikventil mit dicht aufeinanderliegenden, aber gegeneinander beweglichen und mit Verteilerkanälen versehenen Keramikscheiben ausgebildet ist. Um eine leichtgängige Betätigung des Ventils zu erreichen, sind die Oberflächen der Keramikscheiben aufwendig bearbeitet. Weiter sind zwischen den Keramikscheiben Fettaschen vorgesehen.

### Darstellung der Erfindung

Der Erfindung liegt die Aufgabe zugrunde, eine Vorrichtung der eingangs genannten Art in der Weise zu verbessern, dass das Mehrwegeventil auch ohne aufwendige Oberflächenbehandlung seiner Teile sowie ohne jede Schmierung auch über einen längeren Zeitraum zuverlässig arbeitet.

Diese Aufgabe wird erfindungsgemäss gelöst durch eine Vorrichtung mit den Merkmalen des Patentanspruchs 1.

Erfindungsmäss sind demnach durch die Löcher der Lochscheibe Stössel zum Verschliessen der Verteilerkanäle gesteckt, deren Stellung durch die Drehstellung der mit einer Führungskulisse versehenen Steuerscheibe bestimmt ist.

Vorteilhafte Weiterbildungen der Erfindung sind in den abhängigen Patentansprüchen gekennzeichnet.

### Kurze Beschreibung der Zeichnungen

Weitere Ausgestaltungen der Erfindung ergeben sich aus der nachstehenden Erläuterung einer erfindungsgemässen Vorrichtung am Beispiel einer Espressomaschine unter Bezugnahme auf die beigefügten Zeichnungen. Es zeigen:
- Fig. 1: in geschnittener Darstellung ein an einem Verteilerblock einer Espressomaschine angeflanschtes, Mehrwegeventil in erfindungsgemässer Ausbildung in einer ersten Stellung,
- Fig. 2: in gleicher Darstellung das Mehrwegeventil in einer anderen Stellung,
- Fig. 3: eine Aufsicht auf die Lochscheibe des Mehrwegeventils,
- Fig. 4: eine Ansicht der Stirnseite des Verteilerblocks, an der das Mehrwegeventil angeflanscht wird,
- Fig. 5: einen Längsschnitt durch den gleichen Verteilerblock,
- Fig. 6: eine Aufsicht auf die Steuerscheibe des Mehrwegeventils, und
- Fig. 7: einen Schnitt durch die Steuerscheibe entlang der Kreislinie zwischen A und B in Fig. 6.

In den Figuren sind gleiche Teile mit denselben Bezugszeichen versehen.

### Weg zur Ausführung der Erfindung

In den Figuren ist mit 1 ein Verteilerblock einer Espressomaschine bezeichnet, an dem ein Mehrwegeventil 2 angeflanscht ist. Das Mehrwegeventil 2 weist vier Anschlüsse und drei Schaltstellungen auf. Es dient dazu, in einem Erhitzer erzeugtes Heisswasser oder erzeugten Heissdampf wahlweise dem Kaffeefilter, der Aufschäumdüse oder dem Auffangbehälter der Espressomaschine zuzuführen. Da es im vorliegenden Fall auf die Ausbildung des Erhitzers, des Kaffefilters, der Aufschäumdüse, des Auffangbehälters wie auch aller übrigen Teile der Espressomaschine nicht ankommt, wurde auf deren Darstellung der Einfachheit halber verzichtet.

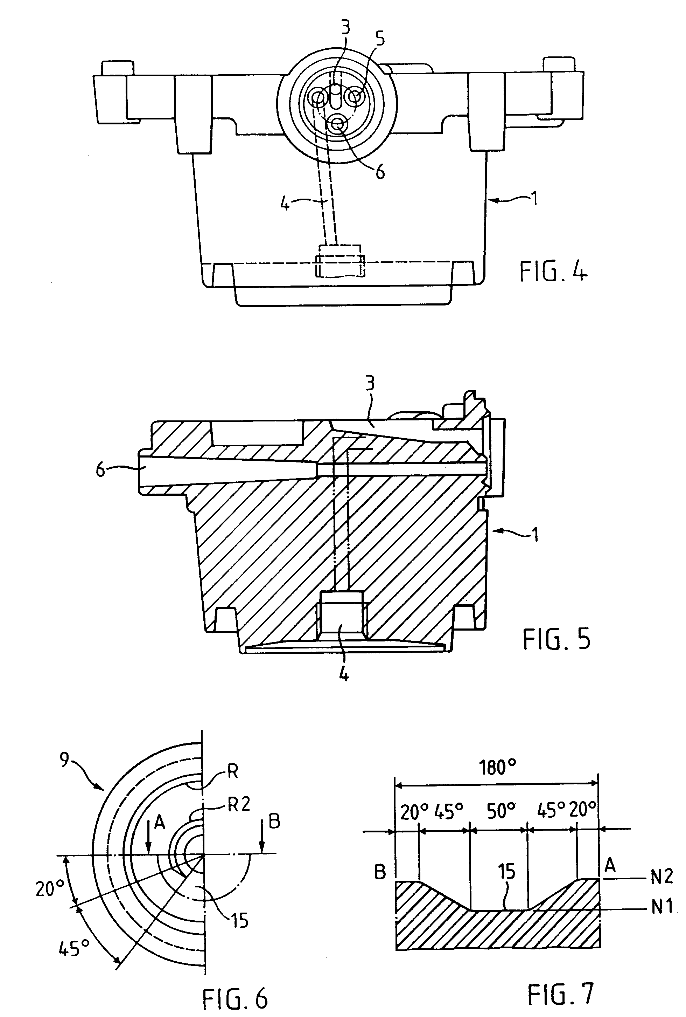

Zur Führung des Heisswassers bzw. des Heissdampfes sind in dem Verteilerblock 1 Kanäle vorgesehen (Figuren 4 und 5). Ein erster Kanal 3 dient zur Zufuhr des Heisswassers oder des Heissdampfes vom Erhitzer zum Mehrwegeventil 2. Von diesem gehen Verteilerkanäle 4, 5 und 6 zum Kaffefilter, zur Aufschäumdüse sowie zum Auffangbehälter ab. Wie in Figur 4 zu erkennen ist, enden die Verteilerkanäle 4, 5 und 6 am Mehrwegeventil 2 auf einem Radius mit der Öffnung des Zufuhrkanals 3 als Mittelpunkt.

Das Mehrwegeventil 2 weist in einem an den Verteilerblock 1 angeschraubten Ventilgehäuse 7 eine Lochscheibe 8 und eine Steuerscheibe 9 auf. Zwischen der Lochscheibe 8 und dem Verteilerblock 1 ist eine Verteilerkammer 20 ausgespart, in welcher der Zufuhrkanal 3 mündet und von welcher auch die Verteilerkanäle 4, 5 und 6 abgehen. Die Lochscheibe 8 ist gegen das Verteilergehäuse ausserhalb der Verteilerkammer mittels einer in ihrem Randbereich dichtenden Membrane 10 abgedichtet. Während die Lochscheibe drehfest im Ventilgehäuse 7 fixiert ist, lässt sich die Steuerscheibe 9 darin und damit relativ zur Lochscheibe 8 verdrehen.

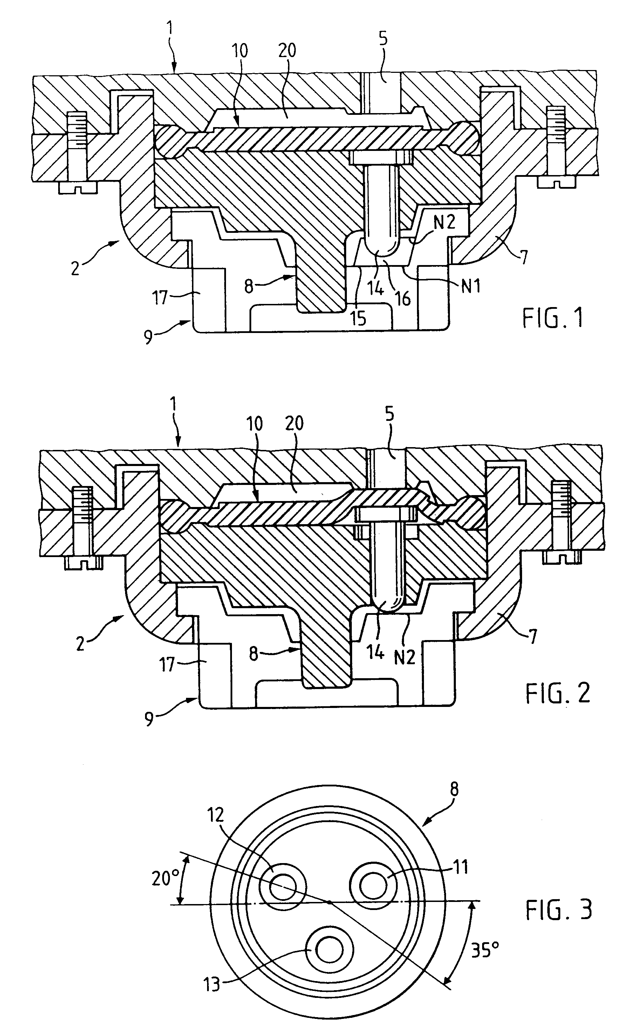

Die Lochscheibe 8 ist mit drei durchgehenden Löchern 11, 12 und 13 versehen. Durch diese sind jeweils Stössel axial beweglich durchgesteckt. Die Stössel dienen zum Verschliessen bzw. Abdichten der Öffnungen der Verteilerkanäle 4, 5 oder 6. Sie sind dazu deckungsgleich mit diesen Öffnungen angeordnet. In den Figuren 1 und 2 ist lediglich einer der Stössel zu erkennen und mit 14 bezeichnet.

Die Stössel 14 sind in der Lochscheibe 8 vollständig versenkbar, jedoch nur soweit, dass sie mit ihrem Kopfende mit der verteilerblockseitigen Oberfläche der Lochscheibe 8 etwa bündig abschliessen. Dies wird erreicht durch eine Abstufung ihres Durchmessers sowie eine entsprechende Abstufung des Durchmessers der Lochscheiben-Löcher.

Die Stössel 14 sind etwas länger bemessen als die Lochscheiben-Löcher 11 bis 13. Sie ragen deshalb, wenn sie mit ihrem Kopfende ganz in der Lochscheibe versenkt sind, ein Stück weit mit ihrem Fussende zur Steuerscheibe 9 hin aus der Lochscheibe 8 heraus.

Die axiale Stellung der Stössel 14 in den Löchern 11 bis 13 der Lochscheibe 8 wird durch die Drehstellung der Steuerscheibe 9 bestimmt. Deren der Lochscheibe 8 zugewandete Seite ist dazu auf einer Ringfläche zwischen zwei Radien R1 und R2 mit einer Führungskulisse für die Stössel 14 versehen. Die Ausbildung dieser Führungskulisse ist anhand der Figuren 6 und 7 zu erkennen. In dem mit 15 bezeichneten Sektor der durch die Radien R1 und R2 begrenzten Ringfläche ist eine Vertiefung vorgesehen. Im Übergangsbereich zwischen den in Fig. 7 mit N1 bzw. N2 bezeichneten Niveaus der Ringfläche sind schräge Flanken vorgesehen. Der Zentriwinkel des Sektors 15 beträgt lediglich 50°.

Bedingt durch diese Ausbildung der Führungskulisse befinden sich jeweils mindestens zwei der Stössel 14 mit ihrem Fussende in Anlage am nicht vertieften Teil der Führungskulisse. Mit ihrem Kopfende stehen sie dabei über die verteilerblockseitige Oberfläche der Lochscheibe 8 über und halten die Membran 10 in dichtender Anlage an den Öffnungen ihrer jeweiligen Verteilerkanäle, wie dies beim Stössel 14 von Fig. 2 der Fall ist. Höchstens jeweils einer der drei Stössel 14, nämlich derjenige, der sich gerade in Deckung mit der genannten Vertiefung (Sektor 15) in der Führungskulisse der Steuerscheibe befindet, lässt sich unter Freigabe der Öffnung des ihm zugeordneten Verteilerkanals und damit der Öffnung eines Strömungsweges in der Verteilerkammer 20 zwischen dem zentral angeordneten Zufuhrkanal 3 und diesem Verteilerkanal vollstän- dig in der Lochscheibe 8 versenken, wie dies beim Stössel von Fig. 1 der Fall ist. Wie anhand von Fig. 1 weiter zu erkennen ist, ist der jeweils in der Lochscheibe vollständig versenkte Stössel dabei jedoch nicht in Anlage an der Führungskulisse. Das Niveau N1 der Vertiefung in der Führungskulisse ist im Hinblick auf die Tatsache, dass auf diesem Stössel beim Betrieb der Espressomaschine ein wesentlich grösser Druck als auf den anderen beiden Stösseln lastet, mit Absicht so tief gewählt, dass zwischen dem Stössel und dem Grund der Vertiefung ein Spalt 16 verbleibt. Die Steuerscheibe 9 muss deswegen nicht den erwähnten hohen Druck aufnehmen, der auf dem ganz in der Lochscheibe 8 versenkten Stössel lastet. Diese Massnahme trägt wesentlich zur Leichtgängigkeit und Haltbarkeit des Mehrwegeventils bei.

In Drehstellungen der Steuerscheibe zwischen jeweils den Drehstellungen, in denen einer der Verteilerkanäle 4, 5 oder 6 geöffnet ist, sind durch die beschriebene Ausbildung der Führungskulisse alle drei Verteilerkanäle geschlossen.

Die Steuerscheibe 9 ist weiter so ausgebildet, dass sie mit einem von Hand betätigbaren Drehknopf (nicht dargestellt) drehgekoppelt werden kann, welcher vorzugsweise gleichzeitig als Ein- oder Ausschalter für die elektrischen Elemente der Espressomaschine, z.B. Druckpumpe etc. dient. Zu diesem Zweck weist die Steuerscheibe 9 einen durch eine Öffnung des Ventilgehäuses 7 nach aussen vorstehenden Teil auf, der mit einer Zahnung 17 versehen ist. Zur Erleichterung der Handhabung kann auch vorgesehen sein, zwischen dem Drehknopf und der Steuerscheibe eine Übersetzung von kleineren zu grösseren Drehwinkeln vorzusehen. Um die Steuerscheibe, wie im vorliegenden Beispiel erforderlich, zwischen zwei Schaltstellungen um etwa 110° zu verdrehen, genügt es dann beispielsweise, je nach Übersetzung, den Drehknopf um nur etwa 45° zu verdrehen.

Wie anhand von Fig. 4 zu sehen ist, gehen zwei der Verteilerkanäle, nämlich die zum Kaffeefilter und zur Aufschäumdüse führenden Kanäle 4 und 5, etwa rechts und links vom zentralen Zufuhrkanal 3 ab, während der dritte Kanal 6, der zum Auffangbehälter führt, unterhalb des zentralen Zufuhrkanals 3 abgeht. Aus dieser Anordnung ergibt sich eine Grundstellung der Steuerscheibe 9, in der die Vertiefung in ihrer Führungskulisse sich in Deckung mit dem zuletzt genannten, zu dem Auffangbehälter führenden Verteilerkanal 6 befindet und dieser dadurch in Verbindung mit dem zentralen Zufuhrkanal 3 ist, während die beiden anderen Verteilerkanäle verschlossen sind. Da der Erhitzer in dieser Stellung der Steuerscheibe 9 zur Umgebung hin offen und entlüftet ist, muss die Druckpumpe in dieser Stellung elektrisch abgeschaltet sein.

Zur Kaffeezubereitung oder zum Betrieb der Aufschäumdüse (Heisswasser oder Dampf) wird die Steuerscheibe 9, beispielsweise durch Drehen an dem mit ihr gekoppelten Drehknopf, aus ihrer Grundstellung wahlweise nach links oder nach rechts verschwenkt, so das entweder der zum Kaffeefilter oder der zur Aufschäumdüse führende Verteilerkanal geöffnet wird. Gleichzeitig wird die Druckpumpe eingeschaltet.

Nach Beendigung der Kaffeezubereitung, der Heisswasserzubereitung oder des Aufschäumvorganges wird die Steuerscheibe 9 in ihre Grundstellung zurückgedreht, wobei die Druckpumpe wieder abgeschaltet und der Erhitzer entlüftet wird. Im Erhitzer noch befindliches Restwasser oder restlicher Heissdampf wird dann zum Auffangbehälter hin ausgestossen.

## Patentansprüche

1. Vorrichtung zur Zubereitung von Heissgetränken, insbesondere Espressomaschine, mit einem an einem Verteilerblock (1) angeflanschten Mehrwegeventil (2), wobei der Verteilerblock mit einem Zufuhrkanal (3) für Heisswasser oder Heissdampf zu dem Mehrwegeventil und mit von diesem zu verschiedenen Einrichtungen, wie Kaffeefilter, Aufschäumdüse und/oder Auffangbehälter, abgehenden Verteilerkanälen (4,5,6) und das Mehrwegeventil mit einer Lochscheibe (8) und einer drehbaren Steuerscheibe (9) versehen ist, dadurch gekennzeichnet, dass zwischen dem Verteilerblock und der Lochscheibe eine Verteilerkammer (20) vorgesehen ist, in welche der Zufuhrkanal mündet und von welcher die Verteilerkanäle abgehen und über welche die Verteilerkanäle wahlweise mit dem Zufuhrkanal verbindbar sind, durch die Löcher der Lochscheibe Stössel (14) zum Verschliessen der Verteilerkanäle gesteckt sind und dass die Stellung der Stössel durch die Drehstellung der mit einer Führungskulisse für die Stössel versehenen Steuerscheibe bestimmt ist.

2. Vorrichtung nach Anspruch 1, dadurch gekennzeichnet, dass zwischen Verteilerblock und Lochscheibe eine die genannte Verteilerkammer vollständig überdeckende, die Lochscheibe gegen den Verteilerblock ausserhalb der Verteilerkammer abdichtende Membrane (10) vorgesehen ist.

3. Vorrichtung nach einem der Ansprüche 1 oder 2, dadurch gekennzeichnet, dass die Stössel in der Lochscheibe durch eine Abstufung ihres Durchmessers sowie des Durchmessers der Lochscheiben-Löcher lediglich soweit versenkbar sind, dass sie mit der verteilerblockseitigen Oberfläche der Lochscheibe bündig abschliessen.

4. Vorrichtung nach Anspruch 3, dadurch gekennzeichnet, dass die Führungskulisse an der Steuerscheibe so ausgebildet ist, dass diejenigen Stössel, die nicht ihren zugehörigen Verteilerkanal verschliessen müssen, in der Lochscheibe vollständig versenkbar und dabei dennoch nicht in Berührung mit der Führungskulisse sind.

5. Vorrichtung nach einem der Ansprüche 1 bis 4, dadurch gekennzeichnet, dass Lochscheibe und Steuerscheibe in einem am Verteilerblock befestigbaren Ventilgehäuse (7) angeordnet sind.

6. Vorrichtung nach einem der Ansprüche 1 bis 5, dadurch gekennzeichnet, dass ein von Hand betätigbarer Drehknopf oder Drehhebel über ein Getriebe mit der Steuerscheibe im Sinne von kleineren zu grösseren Drehwinkeln gekoppelt ist.

7. Vorrichtung nach Anspruch 6, dadurch gekennzeichnet, dass ein durch eine Öffnung des Ventilgehäuses nach aussen vorstehender Teil der Steuerscheibe als Zahnrad (17) ausgebildet und Teil des Getriebes ist.

## Claims

1. Apparatus for preparing hot beverages, in particular espresso machine, having a multi-directional valve (2) flanged on a distributor block (1), the distributor block being provided with a supply channel (3) for hot water or superheated steam to the multi-directional valve and with distributor channels (4, 5, 6) extending therefrom to various devices such as coffee filter, foaming nozzle and/or collecting container, and the multi-directional valve being provided with a perforated disc (8) and a rotatable control disc (9), characterized in that provided between the distributor block and the perforated disc is a distributor chamber (20) in which the supply channel opens and from which the distributor channels extend and via which the distributor channels can be optionally connected to the supply channel, in that tappets (14) are plugged through the holes of the perforated disc in order to close the distributor channels, and in that the position of the tappets is defined by the rotational position of the control disc provided with a guide track for the tappets.

2. Apparatus according to Claim 1, characterized in that provided between distributor block and perforated disc is a diaphragm (10) which completely covers over the abovementioned distributor chamber and seals the perforated disc with respect to the distributor block, outside the distributor chamber.

3. Apparatus according to one of Claims 1 or 2, characterized in that the tappets can be countersunk in the perforated disc, owing to a graduation of the diameter thereof, and of the diameter of the perforated-disc holes, only to the extent where they terminate flush with the distributor-block-side surface of the perforated disc.

4. Apparatus according to Claim 3, characterized in that the guide track on the control disc is configured such that those tappets which do not have to close their appertaining distributor channel can be completely countersunk in the perforated disc, but, in this arrangement, do not come into contact with the guide track.

5. Apparatus according to one of Claims 1 to 4, characterized in that the perforated disc and the control disc are arranged in a valve housing (7) fastened on the distributor block.

6. Apparatus according to one of Claims 1 to 5, characterized in that a manually actuable rotary knob or rotary lever is coupled, via a gear mechanism, to the control disc in order to effect the transmission from smaller to larger angles of rotation.

7. Apparatus according to Claim 6, characterized in that a control-disc part projecting outwards through an opening of the valve housing is configured as a gear wheel (17) and is part of the gear mechanism.

## Revendications

1. Dispositif de préparation de boissons chaudes, en particulier une machine à express, avec une soupape à plusieurs voies (2) fixée par bride à un bloc distributeur (1), le bloc distributeur étant pourvu d'un conduit d'amenée (3) de l'eau chaude ou de la vapeur chaude à la soupape à plusieurs voies et de conduits de distribution (4, 5, 6) allant de cette soupape à diverses installations, comme un filtre à café, une buse vapeur et/ou un récipient collecteur et la soupape à plusieurs voies étant pourvue d'un disque perforé (8) et d'une disque de commande (9) rotatif, caractérisé en ce qu'entre le bloc distributeur et le disque perforé est prévue une chambre de distribution (20), dans laquelle débouche le conduit d'amenée et de laquelle sortent les conduits de distribution, et par l'intermédiaire de laquelle sont raccordés les conduits de distribution de manière sélective avec le conduit d'amenée, des tiges-poussoirs (14) sont enfichées dans les perforations du disque perforé pour boucher les conduits de distribution, et en ce que la position des tiges-poussoirs est déterminée par la position tournante du disque de commande pourvu d'une coulisse de guidage pour les tiges-poussoirs.

2. Dispositif selon la revendication 1, caractérisé en ce qu'entre le bloc distributeur et le disque perforé est prévue une membrane (10) recouvrant complètement la chambre de distribution précitée, séparant hermétiquement le disque perforé du bloc distributeur en dehors de la chambre de distribution.

3. Dispositif selon l'une quelconque des revendications 1 ou 2, caractérisé en ce que les tiges-poussoirs peuvent être enfoncées dans le disque perforé au moyen d'une gradation de leur diamètre ainsi que du diamètre des perforations du disque perforé, seulement jusqu'à ce qu'elles affleurent hermétiquement à la surface du disque perforé du côté du bloc distributeur.

4. Dispositif selon la revendication 3, caractérisé en ce que la coulisse de guidage du disque de commande est conçue de telle sorte que les tiges-poussoirs qui ne doivent pas boucher leurs conduits de distribution respectifs puissent être enfoncées complètement dans le disque perforé et ne soient donc pas en contact avec la coulisse de guidage.

5. Dispositif selon l'une quelconque des revendications 1 à 4, caractérisé en ce que le disque perforé et le disque de commande sont disposés dans un boîtier de soupape (7) pouvant être fixé au bloc distributeur.

6. Dispositif selon l'une quelconque des revendications 1 à 5, caractérisé en ce qu'un bouton tournant manuel ou un levier tournant est couplé au moyen d'un engrenage au disque de commande dans le sens d'un angle de rotation croissant.

7. Dispositif selon la revendication 6, caractérisé en ce que qu'une partie du disque de commande se projetant vers l'extérieur par une ouverture du boîtier de la soupape est conçue en tant que roue dentée (17) et fait partie de l'engrenage.
